# EUROPÄISCHE PATENTSCHRIFT

(11) **EP 3 191 208 B1**
(45) Veröffentlichungstag und Bekanntmachung des Hinweises auf die Patenterteilung: **30.01.2019**
(21) Anmeldenummer: 15763883.4
(22) Anmeldetag: 11.09.2015
(51) Int. Cl.: B01D 46/00, B01D 46/10, B01D 46/12

(54) **FILTEREINRICHTUNG ZUR GASFILTRATION SOWIE FILTERELEMENT FÜR EINE FILTEREINRICHTUNG ZUR GASFILTRATION**
FILTER DEVICE FOR GAS FILTRATIION AND FILTER ELEMENT FOR A FILTER DEVICE FOR GAS FILTRATION
DISPOSITIF FILTRANT DE FILTRATION DE GAZ, ET ÉLÉMENT FILTRANT POUR UN DISPOSITIF FILTRANT DE FILTRATION DE GAZ

(30) Priorität: 12.09.2014 DE 102014013280
(43) Veröffentlichungstag der Anmeldung: 19.07.2017
(73) Patentinhaber: MANN+HUMMEL GmbH, 71636 Ludwigsburg (DE)
(72) Erfinder: SCHMID, Daniel, 74343 Sachsenheim (DE); WALZ, Stefan, 71691 Freiberg (DE); KROHLOW, Matthias, 71083 Herrenberg (DE); SUDERMANN, Arthur, 71711 Steinheim (DE); HOFMEISTER, Marcel, 74391 Erligheim (DE); KOLMEDER, Michael, 84130 Dingolfing (DE); SIEBER, Thomas, 84163 Marklkofen (DE)
(74) Vertreter: Seyboth, Matthias
(86) Internationale Anmeldenummer: PCT/EP2015/070790
(87) Internationale Veröffentlichungsnummer: WO 2016/038172

(56) Entgegenhaltungen:
- EP-A1- 1 144 083
- DE-A1- 4 218 396
- DE-A1-102004 002 293
- DE-A1-102013 000 111
- US-A- 2 999 562

## Beschreibung

### Technisches Gebiet

Die Erfindung bezieht sich auf eine Filtereinrichtung zur Gasfiltration, insbesondere auf einen Luftfilter, nach dem Oberbegriff des Anspruches 1. Des Weiteren betrifft die Erfindung ein Filterelement für eine solche Filtereinrichtung.

### Stand der Technik

Aus dem US-Patent US 2,999,562 ist ein Luftfilter mit einem über einen Zuganker verspannten Gehäuse bekannt. Aus der EP 1 144 083 B1 ist ein Luftfilter für eine Brennkraftmaschine bekannt, der in einem Filtergehäuse ein plattenförmiges Filterelement aufweist, welches orthogonal zur Filterebene von der zu reinigenden Luft durchströmt wird. Die An- und Abströmung erfolgt über seitliche Stutzen im Filtergehäuse, die axial gegenüber dem Filterelement versetzt an der Roh- bzw. Reinseite angeordnet sind. Zur Fixierung im Filtergehäuse weist das Filterelement eine zentrale Ausnehmung auf, in die ein einteilig mit dem Filtergehäuse ausgebildeter Dom einragt. Der Dom nimmt einen Zuganker auf, über den ein Gehäusedeckel mit dem Filtergehäuse verschraubbar ist. Für einen strömungsdichten Abschluss ist an der Stirnseite des Doms in Höhe der Rohseite des Filterelements ein Dichtring aufgesetzt, welcher bei eingeschraubtem Zuganker von einem Vorsprung auf der Innenseite des Gehäusedeckels axial beaufschlagt wird.

### Offenbarung der Erfindung

Der Erfindung liegt die Aufgabe zu Grunde, mit einfachen konstruktiven Maßnahmen eine Filtereinrichtung zur Gasfiltration mit hohem Wirkungsgrad auszubilden.

Diese Aufgabe wird erfindungsgemäß durch eine Filtereinrichtung mit den Merkmalen des Anspruches 1 und eine Filterelement mit den Merkmalen des Anspruchs 17 gelöst. Die Unteransprüche geben zweckmäßige Weiterbildungen an.

Die erfindungsgemäße Filtereinrichtung bzw. das erfindungsgemäße Filterelement wird zur Gasfiltration eingesetzt, beispielsweise als Luftfilter, über den die der Brennkraftmaschine eines Fahrzeugs zuzuführende Verbrennungsluft gereinigt wird. Möglich ist auch beispielsweise eine Anwendung zur Filtration von Atemluft, die dem Fahrzeuginnenraum oder einer Kabine zugeführt wird.

Die Filtereinrichtung weist ein ebenes, plattenförmiges Filterelement auf, das orthogonal zu seiner Filterebene von dem zu reinigenden Gas durchströmt wird; eine Seite des Filterelements bildet dementsprechend die Rohseite, welche von dem zu reinigenden Gas angeströmt wird, die gegenüberliegende Seite die Reinseite, über die das gereinigte Gas abströmt. Die Filtereinrichtung ist des Weiteren mit einem Deckelelement versehen, das mithilfe eines Zugankers am Filtergehäuse befestigbar ist, wobei der Zuganker durch eine Ausnehmung im Filterelement hindurchgeführt ist.

Die Ausnehmung im Filterelement bildet einen reinseitigen Gassammelraum, in den das Gas nach seiner Filtration von der Reinseite des Filterelements geleitet wird. Der Gassammelraum dient zum Sammeln des gereinigten Gases und zur Beruhigung der Strömung zur Vermeidung bzw. Verringerung von Turbulenzen und Verwirbelungen sowie zum Ausbilden einer laminaren Strömung, mit der das gereinigte Gas aus dem Sammelraum abgeleitet wird. Die Ableitung erfolgt vorzugsweise durch einen Abströmstutzen, der in das Filtergehäuse eingebracht ist und mit dem Gassammelraum kommuniziert.

Auf der Reinseite des Filterelements ist ein Dichtungselement angeordnet, welches im montierten Zustand die Rein- von der Rohseite strömungsdicht separiert. Der Zuganker ist durch den Gassammelraum geführt und verbindet das Deckelelement mit dem Filtergehäuse. Um zu vermeiden, dass im Bereich des Zugankers Fehlluftströme zwischen Roh- und Reinseite auftreten, ist der Zuganker im Gassammelraum durch ein Dichtauge geführt, das mit dem Dichtungselement auf der Reinseite des Filterelements verbunden ist. Das Dichtungselement umrahmt den Gassammelraum, welcher als Ausnehmung in das Filterelement eingebracht ist, zumindest teilweise.

Diese Ausführung hat den Vorteil, dass über den Gassammelraum eine Strömungsberuhigung eintritt, außerdem ist auf Grund der Integration des Gassammelraums in das Filterelement eine kompakte Ausführung gegeben. Der Gassammelraum ist hierbei vorteilhafterweise so in das Filterelement integriert, dass eine Einhüllende entlang der Außenkontur des Filterelements auch den Gassammelraum umschließt. Der Gassammelraum ist vorteilhafterweise randseitig offen ausgebildet und wird an mindestens zwei Seiten von dem Filterelement begrenzt, wobei über die offene Seite bevorzugt die Ableitung des gereinigten Gases erfolgt. In Betracht kommen auch randseitig umschlossene Gassammelräume, die in das Filterelement integriert und vollständig von dem Material des Filterelements umschlossen sind.

Indem der Zuganker durch den Gassammelraum geführt ist, wird kein zusätzlicher Bauraum für die Verbindung zwischen dem Deckelelement und dem Filtergehäuse benötigt. Auch dies begünstigt eine kompakte Ausführung. Zugleich wird über das Dichtauge, durch das der Zuganker geführt ist, eine strömungsdichte Separierung zwischen Roh- und Reinseite erzielt, so dass von dem Gassammelraum, der das gereinigte Gas aufnimmt, keine unerwünschte Strömungsverbindung zur Rohseite im Bereich des Zugankers entstehen kann. Das Dichtauge ist mit dem Dichtungselement verbunden und kann ggf. in einem gemeinsamen Prozessschritt mit dem Dichtungselement hergestellt werden. Das Dichtauge kann ggf. einteilig mit dem Dichtungselement ausgeführt sein, wobei grundsätzlich auch eine Ausführung als separates Bauteil in Betracht kommt, welches jedoch mit dem Dichtungselement verbunden ist.

Das Dichtungselement verläuft vorteilhafterweise entlang der Außenkontur des Filterelements. Das Dichtauge befindet sich bevorzugt in unmittelbarer Nähe zum Dichtungselement. Das Dichtauge kann ggf. mit einem Dichtungshenkel verbunden sein, der den Gassammelraum überspannt, insbesondere entlang der Einhüllenden bzw. Außenkontur des Filterelements, und der mit dem Dichtungselement verbunden ist, wobei sowohl eine einteilige Ausführung als auch eine Ausführung als separates Bauteil in Betracht kommt. Der Dichtungshenkel, welcher den Gassammelraum überbrückt, liegt im montierten Zustand an der äußeren Mantelfläche eines Abströmstutzens auf, welcher mit dem Gassammelraum kommuniziert und über den das im Gassammelraum aufgenommene, gereinigte Gas aus der Filtereinrichtung aufgenommen wird. Der Abströmstutzen kann hierbei in Bezug auf das Filterelement so ausgerichtet sein, dass die Längsachse des Abströmstutzens parallel zur Filterebene verläuft und bevorzugt auf das Filterelement gerichtet ist.

Gemäß einer weiteren zweckmäßigen Ausführung ist das Filtergehäuse mit einem Dom versehen, der in den Gassammelraum einragt und an dem sich das Dichtauge abstützt. Der Dom dient zur Verbindung mit dem Deckelelement bzw. mit dem Zuganker, welcher in den Dom einschraubbar ist. An dem Dom kann eine Ringschulter ausgebildet sein, auf der das Dichtauge aufsitzt, wobei die Ringschulter vorteilhafterweise einen Aufnahmeabschnitt umgreift, der an der Stirnseite des Doms angeordnet ist und zum Einschrauben des Zugankers dient. Der Zuganker ist bevorzugt durch einen Verbindungsabschnitt auf der Unterseite des Deckelelements geführt und ragt mit seinem Gewinde in den Aufnahmeabschnitt am Dom des Filtergehäuses ein.

Bei dem Deckelelement kann es sich um einen Gehäusedeckel des Filtergehäuses handeln. Möglich ist auch eine Ausführung des Deckelelements zur Begrenzung des Reinraums auf der Reinseite des Filterelements, wobei das Deckelelement über den Zuganker mit einer ausreichend hohen Kraft auf das Dichtungselement bzw. das Dichtauge an der Reinseite des Filterelements gedrückt wird, um einen strömungsdichten Abschluss zu erreichen.

Das Filterelement ist beispielsweise U-förmig ausgebildet, wobei der Gassammelraum zwischen den beiden seitlichen Schenkeln der U-Form und einem die Schenkel verbindenden, mittleren Abschnitt des Filterelements angeordnet und von diesen Abschnitten begrenzt ist. Möglich ist auch eine H-förmige Ausführung mit zwei gegenüberliegend angeordneten Gassammelräumen, die von seitlichen Schenkeln des Filterelements begrenzt und von einem mittleren Abschnitt des Filterelements separiert sind. Bei beiden Ausführungsbeispielen befindet sich der Gassammelraum innerhalb der Außenkontur des Filterelements, wobei vorteilhafterweise jedem Gassammelraum ein Abströmstutzen für die Ableitung des gereinigten Gases zugeordnet ist.

Das Filterelement besitzt vorzugsweise eine rechteckförmige Außenkontur, auch der Gassammelraum kann rechteckförmig ausgeführt sein. Darüber hinaus sind aber auch abweichende Geometrien für das Filterelement als auch für den Gassammelraum möglich, beispielsweise ein dreieckförmiger Gassammelraum.

Gemäß einer weiteren zweckmäßigen Ausführung entspricht die Grundform des Gassammelraums einem Ausschnitt aus dem Filterelement. Das Filterelement ist insbesondere randseitig ausgeschnitten, wobei der Ausschnitt den Gassammelraum bildet. Beispielsweise kann bei einem blockförmigen Filtermediumkörper des Filterelements, an dem die Filtration stattfindet, ein an den Rand angrenzender Bereich ausgeschnitten sein, z.B.in Rechteckform, Dreieckform oder halbrund, welcher den Gassammelraum bildet. Der Gassammelraum schließt sich somit unmittelbar an den Randbereich des ausgeschnittenen Filtermediumkörpers an. Der den Gassammelraum überspannende Dichtungshenkel kann teilkreisförmig ausgebildet sein.

Gemäß einer weiteren zweckmäßigen Ausführung besteht das Filterelement aus mindestens zwei Einzelfiltern, welche beispielsweise als Filterbälge mit zickzackförmig gefaltetem Filtermedium ausgebildet sind. Jeder Einzelfilter ist eben ausgeführt, aneinandergrenzende Einzelfilter liegen parallel zueinander. Die Einzelfilter können sich im Hinblick auf ihre Dicke, Länge und/ oder Breite voneinander unterscheiden oder ggf. auch gleich ausgebildet sein. Es kann zweckmäßig sein, dass die Reinseite sämtlicher Einzelfilter, welche das Filterelement bilden, in einer gemeinsamen Ebene liegt.

Der oder die Filterbälge können eine Ausrichtung der Filterfalten orthogonal zu der Randseite des Filterelements aufweisen, an der sich der randseitig offene Gassammelraum befindet. Es kommt aber auch eine Ausführung in Betracht, bei der die Filterfalten des Filterbalgs parallel zu der Randseite des Filterelements mit dem randseitig offenen Gassammelraum verlaufen. Des Weiteren ist es möglich, bei mehreren Filterbälgen, die jeweils einen Einzelfilter bilden, entweder eine gleiche Ausrichtung der Filterfalten sämtlicher Filterbälge oder eine unterschiedliche Ausrichtung der Filterfalten vorzusehen.

Gemäß noch einer weiteren zweckmäßigen Ausführung ist an das Filterelement, insbesondere an dem Filtermediumkörper des Filterelements ein umlaufender Kunststoffrahmen angeordnet, beispielsweise angespritzt. Der Kunststoffrahmen ist fest mit dem Filtermediumkörper verbunden und kann Träger des umlaufenden Dichtungselements sein. Der Kunststoffrahmen befindet sich an der Rand- bzw. Außenseite des Filtermediumkörpers und folgt somit der Außenkontur des Filtermediumkörpers.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: hilfreich zum Verständnis der Erfindung eine als Luftfilter ausgeführte Filtereinrich-tung, mit einem plattenförmigen Filterelement in U-Form, das einen reinseitigen Gassammelraum begrenzt, über den das gereinigte Gas einem Abströmstutzen zur Ableitung aus dem Filtergehäuse zuführbar ist,
- Fig. 2: hilfreich zum Verständnis der Erfindung die Filtereinrichtung gemäß Fig. 1 mit aufgesetztem Deckelelement auf dem Filterelement,
- Fig. 3: hilfreich zum Verständnis der Erfindung das Deckelelement in einer Ansicht von unten,
- Fig. 4: hilfreich zum Verständnis der Erfindung einen Schnitt durch den Randbereich des Filterelements,
- Fig. 5: hilfreich zum Verständnis der Erfindung das Filterelement in perspektivischer Darstellung,
- Fig. 6: hilfreich zum Verständnis der Erfindung einen Schnitt gemäß Schnittlinie VI-VI aus Fig. 5 durch das Filterelement,
- Fig. 7: hilfreich zum Verständnis der Erfindung in perspektivischer Darstellung das in das Filtergehäuse eingesetzte Filterelement,
- Fig. 8: ein erfindungsgemäßes Filterelement in einer Ausführungsvariante mit Dichtaugen im Gassammelraum, wobei die Dichtaugen mit einem umlaufenden Dichtelement am Filterelement verbunden sind,
- Fig. 9: einen Schnitt durch das erfindungsgemäße Filterelement im Bereich eines Dichtauges, durch das ein Zuganker zur Verbindung des Filtergehäuses mit dem Deckelelement geführt ist,
- Fig. 10, 11: hilfreich zum Verständnis der Erfindung die Darstellung eines Dichtungshenkels an einem Rahmen, der auf einen Filterbalg aufsetzbar ist, wobei der Dichtungshenkel ein separates Kunststoffbauteil umfasst, an das ein Dichtschaum angespritzt wird,
- Fig. 12: hilfreich zum Verständnis der Erfindung zwei Dichtungshenkel an gegenüberliegenden Seiten eines Filterbalgs, wobei die Dichtungshenkel einteilig mit einem Rahmenelement am Filterbalg ausgebildet und mit Dichtungsmaterial versehen sind,
- Fig. 13: hilfreich zum Verständnis der Erfindung eine Ausführung ähnlich wie in Fig. 12, jedoch mit einer abweichenden Geometrie des Dichtungshenkels,
- Fig. 14: ein erfindungsgemäßes Filterelement in einer Ausführungsvariante mit einem teilkreisförmigen Gassammelraum im Randbereich des Filterelements, mit einem ringförmigen Dichtungselement am Gassammelraum, an dem ein Dichtauge angeformt ist.

In den Figuren sind gleiche Bauteile mit gleichen Bezugszeichen versehen.

### Ausführungsformen der Erfindung

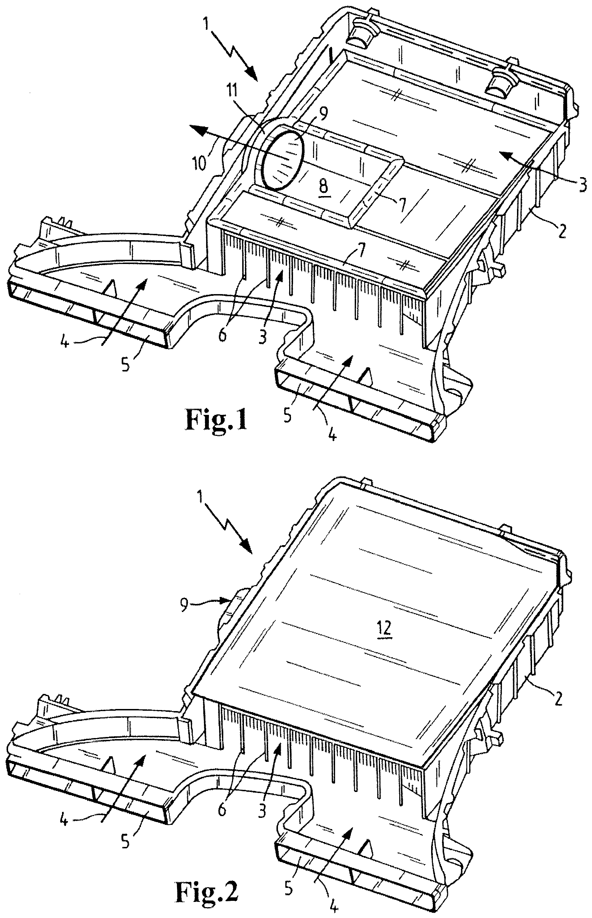

In Fig. 1 ist eine Filtereinrichtung 1 zur Gasfiltration dargestellt, die als Luftfilter zur Filtration der der Brennkraftmaschine eines Fahrzeugs zuzuführenden Verbrennungsluft einsetzbar ist. Die Filtereinrichtung 1 weist in einem Filtergehäuse 2 ein U-förmiges Filterelement 3 auf, das eben bzw. plattenförmig ausgebildet ist, wobei in Fig. 1 die unten liegende Seite des Filterelements 3 die Rohseite und die oben liegende Seite die Reinseite darstellt. Die Anströmung erfolgt gemäß den Pfeilen 4 über Einlässe 5 im Filtergehäuse 2, wobei die Rohseite des Filterelements 3 über Stützrippen 6 des Filtergehäuses 2 von den Einlässen 5 separiert ist. Die Stützrippen 6 haben eine stützende Funktion für ein umlaufendes Dichtungselement 7 an der Ober- bzw. Reinseite des Filterelements 3. Das Dichtungselement 7 erstreckt sich entlang der U-förmigen Außenkontur an der Oberseite des Filterelements 3. Die Stützrippen 6 erlauben eine Einströmung der Rohluft zur unten liegenden Rohseite des Filterelements 3, sie können ggf. zusätzlich zur Stützfunktion auch eine strömungsleitende Funktion haben.

Im U-förmigen Bereich des Filterelements 3 ist ein Gassammelraum 8 für das gereinigte Gas gebildet, welches von der oben liegenden Reinseite des Filterelements 3 in den Gassammelraum 8 einströmt. Der Gassammelraum 8 liegt innerhalb der rechteckförmigen Außenkontur bzw. Einhüllenden des Filterelements 3 und wird an drei Seiten von dem Filterelement 3 begrenzt. Der Gassammelraum 8 ist randseitig offen ausgebildet, im Bereich seiner offenen Seite befindet sich ein gehäuseseitiger Abströmstutzen 9, über den das im Gassammelraum gesammelte, gereinigte Gas gemäß Pfeil 10 aus dem Filtergehäuse abgeleitet wird. Der Pfeil 10 markiert zugleich die Längsachse des Abströmstutzens 9. Der Abströmstutzen 9 weist auf seiner dem Gassammelraum 8 zugewandten Seite eine tulpen- bzw. trompetenförmige Erweiterung auf, die eine verbesserte Ableitung des Gases aus dem Gassammelraum 8 gewährleistet.

Neben dem Sammeln des an der Oberseite ausströmenden, gereinigten Gases am Filterelement 3 kommt dem Gassammelraum auch eine strömungsberuhigende Funktion zu. Hierdurch wird eine laminare Abströmung des gereinigten Gases gemäß Pfeil 10 über den Abströmstutzen 9 unterstützt.

Einteilig mit dem Dichtungselement 7 auf der Ober- bzw. Reinseite des Filterelements 3, das entlang der Außenkontur am Filterelement 3 umläuft, ist ein Dichtungshenkel 11 ausgebildet, der den Gassammelraum 8 überbrückt und auf der Mantelfläche des Abströmstutzens 9 aufliegt.

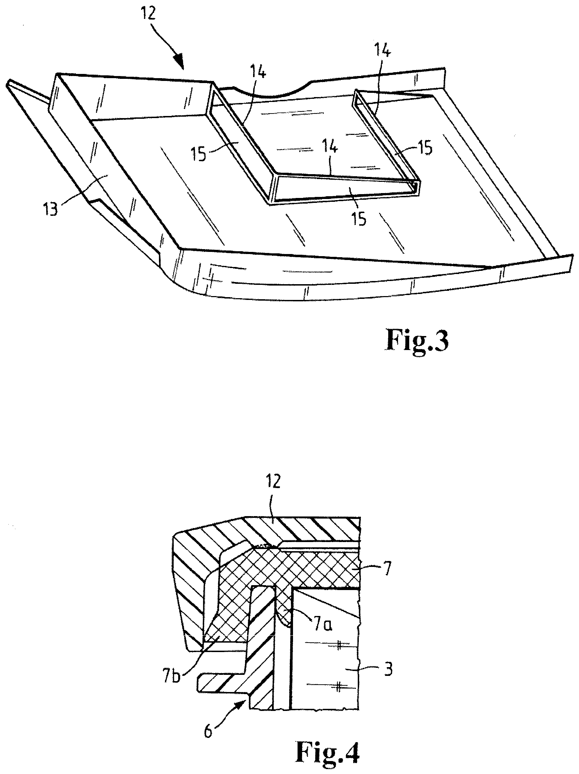

In Fig. 2 ist die Filtereinrichtung 1 mit einem Kunststoff-Deckelelement 12 dargestellt, der auf das Filterelement 3 aufgesetzt ist. In Fig. 3 ist das Deckelelement 12 in einer Ansicht von unten dargestellt, woraus zu entnehmen ist, dass am Deckelelement 12 ein umlaufender Dichtrahmen 13 angeformt ist, der in montierter Position auf dem umlaufenden Dichtungselement 7 (Fig. 1) aufliegt und einen Reinraum an der oben liegenden Reinseite des Filterelements 3 nach außen begrenzt. Auf der Innenseite des Deckelelements 12 ist außerdem, wie Fig. 3 des Weiteren zu entnehmen, ein Stützrahmen 14 angeformt, welcher der rechteckförmigen Kontur des Gassammelraums 8 entspricht und in den Durchbrüche 15 eingebracht sind, über die das gereinigte Gas von der Reinseite des Filterelements nach innen in Richtung Gassammelraum 8 strömt.

Fig. 4 zeigt eine Schnittdarstellung durch den Randbereich des Filterelements 3 mit umlaufendem Dichtungselement 7, das radial dichtend wirkt und an dem aus Kunststoff bestehenden Filtergehäuse 2 über die Stützrippen 6 bzw. einem von den Stützrippen 6 getragenen Querbalken abgestützt wird. Zwischen den Stützrippen 6 bzw. dem Querbalken und dem Filterelement 3 befindet sich eine Dichtlippe 7a. Auf der Außenseite der Stützrippe 6 bzw. dem Querbalken liegt eine weitere, umgebogene Dichtlippe 7b. Die Dichtlippe 7b sowie die obenliegenden Abschnitte des Dichtungselements 7 werden von dem Deckelelement 12 übergriffen.

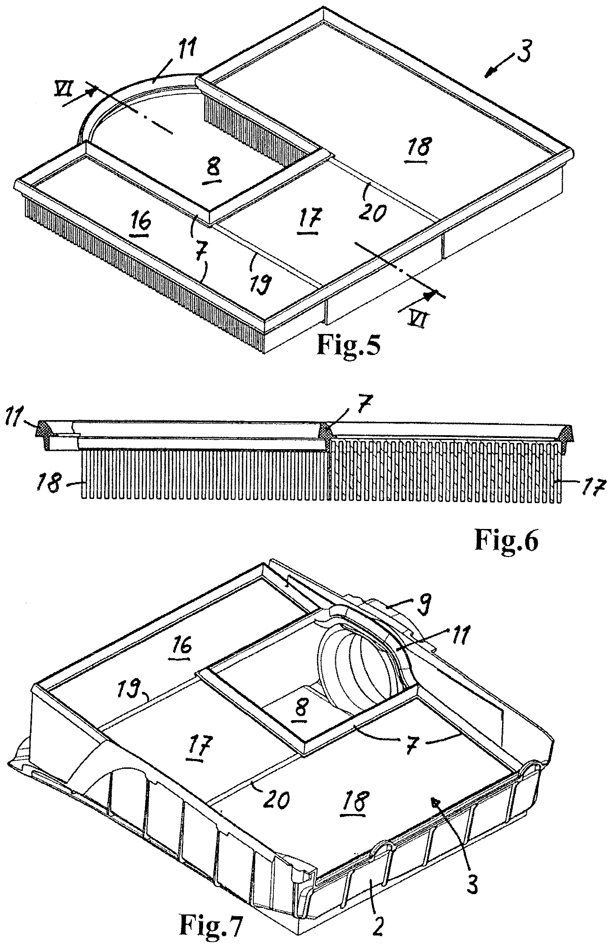

In den Figuren 5 und 6 ist das Filterelement 3 in Einzeldarstellung gezeigt. Das U-förmige Filterelement 3 setzt sich aus drei einzelnen, separat ausgebildeten Einzelfiltern zusammen, die als Filterbälge 16, 17 und 18 ausgeführt sind, welche jeweils ein gefaltetes Filtermittel aufweisen und eben bzw. plattenförmig ausgebildet sind. Die oben liegende Reinseite aller Filterbälge 16, 17 und 18 liegt in einer gemeinsamen Ebene, wohingegen die unten liegende Rohseite aufgrund unterschiedlicher Höhe der Filterbälge in verschiedenen Ebenen liegt. Die beiden außen liegenden Filterbälge 16 und 18 bilden die Schenkel der U-Form, der mittlere, zwischenliegende Filterbalg 17 verbindet die beiden außen liegenden Filterbälge 16 und 18. Die Filterbälge 16, 17 und 18 begrenzen den rechteckförmigen Gassammelraum an drei verschiedenen Seiten. Auch das Filterelement 3 weist insgesamt Rechteckform auf, wobei sich der Gassammelraum 8 innerhalb der Einhüllenden bzw. Außenkontur der Rechteckform des Filterelements 3 befindet und randseitig offen ausgebildet ist. Der erste, außen liegende Filterbalg 16 weist eine geringere Höhe auf als die beiden weiteren Filterbälge 17 und 18, die gleich hoch ausgebildet sind. Die Länge des Gassammelraums 8 - entlang der Längserstreckung der seitlichen Schenkel 16 und 18 gesehen - entspricht etwa der Hälfte der Gesamtlänge des Filterelements 3.

An seiner offenen Seite wird der Gassammelraum 8 Im Bereich der Außenkontur des Filterelements von dem Dichtungshenkel 11 überspannt, welcher im montierten Zustand (Fig. 7) auf der äußeren Mantelfläche des Abströmstutzens 9 aufliegt. Im Ausführungsbeispiel gemäß den Figuren 5 bis 7 ist der Dichtungshenkel 11 einteilig mit dem Dichtungselement 7 auf der Reinseite des Filterelements 3 ausgebildet. Das Dichtungselement 7 und der Dichtungshenkel 11 werden an das Filterelement 3 angegossen.

Der Dichtungshenkel 11 liegt im unverformten Zustand (Fig. 5, 6) in der gleichen Ebene wie das umlaufende Dichtungselement 7 und ist konvex nach außen gekrümmt, so dass die tatsächliche Länge des Dichtungshenkels 11 größer ist als die zu überbrückende Breite des Gassammelraums 8. Dies ermöglicht es, den Dichtungshenkel 11, wie in Fig. 7 dargestellt, um 90° hochzuklappen und hierdurch dreidimensional zu verformen, so dass sich der Dichtungshenkel an den Außenmantel des Abströmstutzens 9 im Filtergehäuse 2 anlegt.

Jeweils zwei aneinandergrenzende Filterbälge 16, 17 bzw. 17, 18 sind von einem Dichtstreifen 19 bzw. 20 zusammengehalten. Im Übrigen liegen die Filterbälge 16, 17, 18 unmittelbar aneinander. Auch das umlaufende Dichtungselement 7 hält die Filterbälge 16 bis 18 zusammen.

Die Erstreckung in Querrichtung, also quer zur Längserstreckung entlang der die Schenkel bildenden, außen liegenden Filterbälge 16 und 18, kann für die Filterbälge unterschiedlich groß ausfallen. Im Ausführungsbeispiel weist der erste, außen liegende Filterbalg 16 eine kleinere Quererstreckung auf als die beiden weiteren Filterbälge 17 und 18, die annähernd in Querrichtung gleich groß sind.

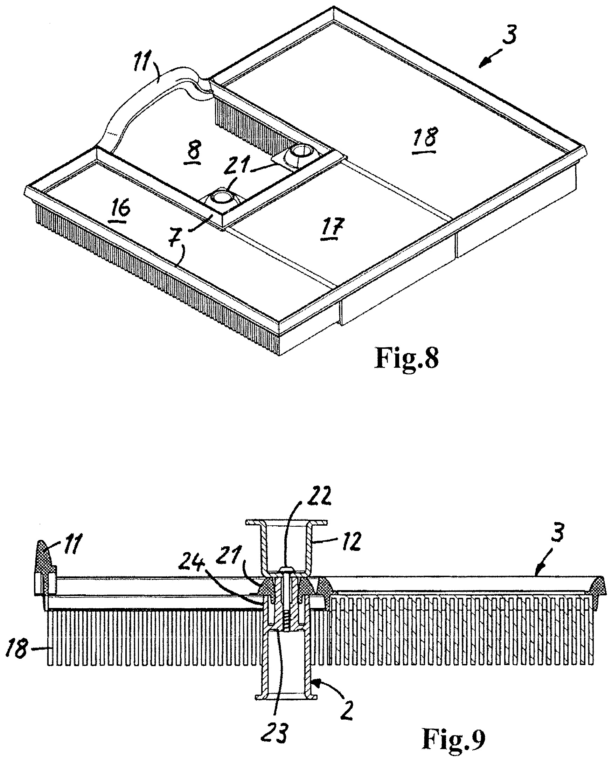

In den Figuren 8 und 9 ist eine Ausführungsvariante dargestellt, bei der das Filterelement 3 grundsätzlich den gleichen Aufbau wie in Fig. 5 aufweist. Zusätzlich sind jedoch Dichtaugen 21 an dem umlaufenden Dichtungselement 7 angeformt, die zur Aufnahme eines Zugankers dienen, über den im Bereich der Dichtaugen 21 das Deckelelement 12 mit dem Filtergehäuse 2 durch Verschrauben zu verbinden ist. Die Dichtaugen 21 befinden sich im Gassammelraum 8 auf der dem mittleren Filterbalg 17 zugewandten Seite und sind vorzugsweise einteilig mit dem Dichtungselement 7 ausgeführt. Der Zuganker 22 wird von oben in eine Vertiefung im Deckelelement 12 eingesetzt und in einen Dom 23 des Filtergehäuses 2 eingeschraubt, der von dem unten liegenden Filtergehäuse 2 nach oben ragt und sich im Eckbereich des Gassammelraums 8 befindet. Das Dichtauge 21 umgreift den Dom 23 und stützt sich auf einer Ringschulter 24 des Doms 23 ab. Die oben liegende Stirnseite des Dichtauges 21 wird axial von der Vertiefung im Deckelelement beaufschlagt, an der auch der Kopf des Zugankers 22 anliegt. Mit dem Einschrauben des Zugankers 22 in den Dom 23 wird axial ein Druck auf das Dichtauge 21 ausgeübt, so dass der oben liegende Reinraum strömungsdicht von der unten liegenden Rohseite separiert ist.

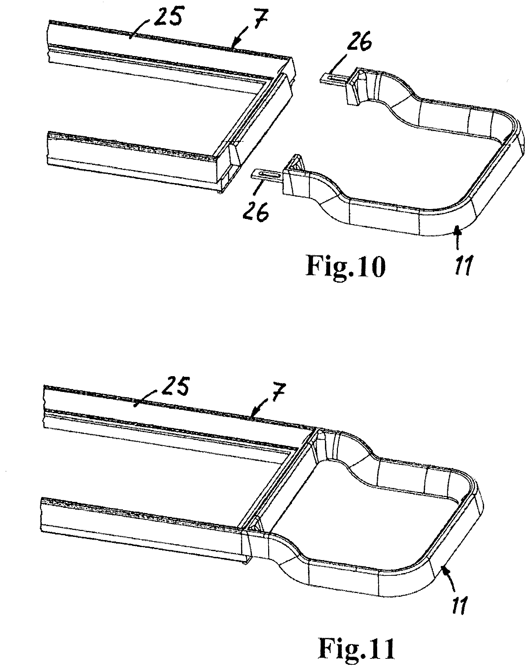

In den Figuren 10 und 11 ist eine Ausführungsvariante zur Herstellung eines umlaufenden Dichtungselements 7 dargestellt. Im Unterschied zu den vorherigen Ausführungsbeispielen wird das Dichtungselement 7 nicht an das Filterelement angegossen, vielmehr wird gemäß den Figuren 10 und 11 ein Träger 25 aus Kunststoff, der einen Rahmen bildet, mit dem Filterelement bzw. dem Filterbalg verbunden, insbesondere verklebt. Der Rahmen 25 kann anschließend mit einem Dichtungsmaterial versehen werden, beispielsweise mit einem andosierten PUR-Schaum.

Der Dichtungshenkel 11, welcher auf dem Abströmstutzen aufliegt, ist als ein separates Bauteil ausgeführt und besteht analog zum Dichtungselement 7 aus einem Träger aus Kunststoff, der U-förmig ausgebildet ist und an seinen beiden Stirnseiten jeweils eine Verbindungslasche 26 zur Verbindung mit dem Rahmen 25 aufweist. Nach dem Verbinden des Dichtungshenkels 11 mit dem Rahmen 25 (Fig. 11) können in einem gemeinsamen Schritt der Rahmen 25 und der Kunststoffträger des Dichtungshenkels 11 mit Dichtungsmaterial versehen werden.

Der Dichtungshenkel 11 weist eine dreidimensional verformte Gestalt auf und ist insbesondere an die Außenkontur des Abströmstutzens angepasst.

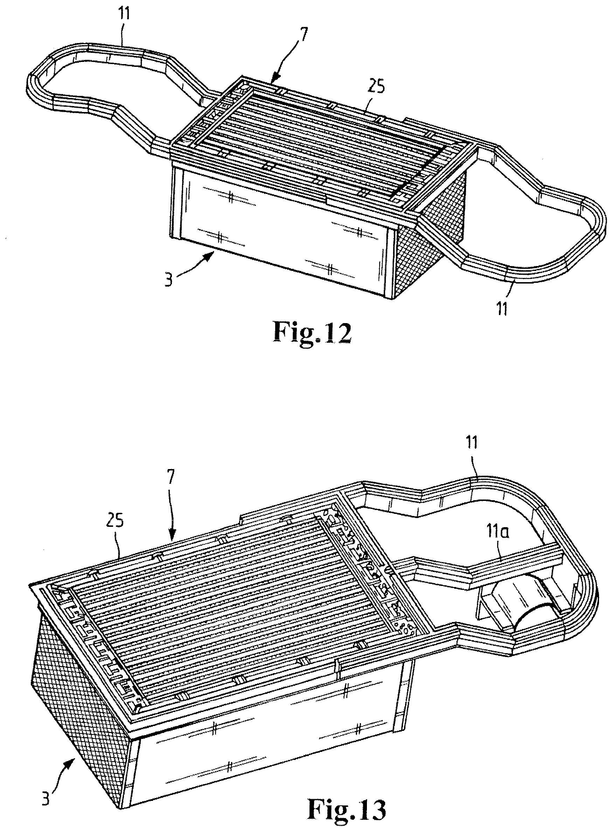

Im Ausführungsbeispiel gemäß Fig. 12 ist der Dichtungshenkel 11 einteilig mit dem Dichtungselement 7 ausgebildet. Das Dichtungselement 7 besteht wie im Ausführungsbeispiel gemäß Figuren 10 und 11 aus einem Rahmen 25 aus Kunststoff, der mit dem Filterelement 3 verbunden wird, beispielsweise mittels Verkleben. Einteilig mit dem Rahmen 25 ist der Kunststoffträger des Dichtungshenkels 11 ausgebildet, der dreidimensional verformt ist und gemäß linker Bildhälfte in Fig. 12 gegenüber der Ebene des Rahmens 25 nach oben abgekröpft und gemäß rechter Bildhälfte in Fig. 12 nach unten abgekröpft ist. Der Rahmen 25 und der Kunststoffträger des Dichtungshenkels 11 werden in einem gemeinsamen Schritt mit Dichtungsmaterial versehen, das beispielsweise angespritzt werden kann.

Im Ausführungsbeispiel gemäß Fig. 13 ist wie bei Fig. 11 das Dichtungselement 7 mit einem Rahmen 25 versehen, mit dem einteilig der Kunststoffträger des Dichtungshenkels 11 ausgebildet ist. Rahmen 25 und Kunststoffträger des Dichtungshenkels können gemeinsam mit Dichtungsmaterial versehen werden. Im Dichtungshenkel 11 kann, im Unterschied zu Fig. 12, ein zusätzlicher Steg 11a angeformt sein, der sich mittig zwischen dem U-förmigen Dichtungshenkel 11 erstreckt und die Stabilität verbessert. Der zusätzliche Steg 11a kann zudem Träger weiterer Kunststoff-Funktionsteile sein. Auch der Steg 11a kann mit Dichtungsmaterial versehen werden.

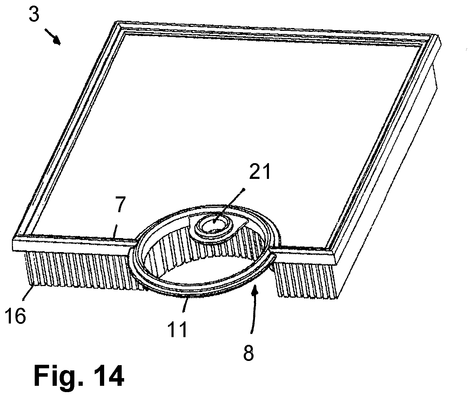

In Fig. 14 ist ein weiteres Ausführungsbeispiel eines Filterelements 3 mit einem Filterbalg 16 dargestellt, der als Faltenfilter ausgebildet ist. Der Filterbalg 16 ist im randseitigen Bereich ausgeschnitten, wobei der Ausschnitt den Gassammelraum 8 bildet, der in Fig. 14 eine teilkreisförmige Grundform aufweist.

An der Außenkontur des Filterbalgs 16 läuft das Dichtungselement 7 um, das auch der Kontur im Bereich des den Gassammelraum 8 bildenden Ausschnittes folgt. Im Bereich des Gassammelraums 8 nimmt das Dichtungselement Ringform ein, wobei der über die Randseite des Filterelements überstehende Ringbereich den Dichtungshenkel 11 bildet, der im eingebauten Zustand des Filterelements auf der Mantelfläche des Abströmstutzens aufliegt. Ggf. ist am Filterbalg 16 ein Kunststoffrahmen angespritzt, der Träger des Dichtungselements 7 ist und auch Bestandteil des Dichtungshenkels 11 sein kann.

Im innen liegenden Bereich des ringförmigen Dichtungselements ist ein Dichtauge 21 angeformt, das entsprechend zur Ausführung gemäß den Fig. 8 und 9 zur Aufnahme eines Zugankers dient, über den im Bereich des Dichtauges ein Deckelelement mit dem Filtergehäuse durch Verschrauben zu verbinden ist.

## Patentansprüche

1. Filtereinrichtung zur Gasfiltration, insbesondere Luftfilter, mit einem in einem Filtergehäuse (2) aufgenommenen, plattenförmigen Filterelement (3), das orthogonal zu seiner Filterebene von dem zu reinigenden Gas durchströmbar ist, mit einem Deckelelement (12), das über einen das Filterelement (3) durchsetzenden Zuganker (22) mit dem Filtergehäuse (2) verbunden ist, wobei eine Ausnehmung in das Filterelement (3) eingebracht ist, die einen reinseitigen Gassammelraum (8) bildet, **dadurch gekennzeichnet, dass** der Zuganker (22) im Gassammelraum (8) durch ein Dichtauge (21) geführt ist, das mit einem Dichtungselement (7) verbunden ist, welches auf der Reinseite des Filterelements (3) angeordnet ist und den Gassammelraum (8) zumindest teilweise umrahmt.

2. Filtereinrichtung nach Anspruch 1, **dadurch gekennzeichnet, dass** das Dichtungselement (7) entlang der Außenkontur des Filterelements (3) verläuft.

3. Filtereinrichtung nach Anspruch 1 oder 2, **dadurch gekennzeichnet, dass** das Dichtauge (21) mit einem Dichtungshenkel (11) verbunden ist, der den Gassammelraum (8) überspannt und mit dem Dichtungselement (7) auf der Reinseite des Filterelements (3) verbunden ist.

4. Filtereinrichtung nach Anspruch 3, **dadurch gekennzeichnet, dass** der Dichtungshenkel (11) teilkreisförmig ausgebildet ist.

5. Filtereinrichtung nach einem der Ansprüche 1 bis 3, **dadurch gekennzeichnet, dass** das Dichtauge (21) an einem Dom (23) des Filtergehäuses (2) abgestützt ist, der in den Gassammelraum (8) einragt.

6. Filtereinrichtung nach Anspruch 4, **dadurch gekennzeichnet, dass** an dem Dom (23) eine Ringschulter (24) gebildet ist, auf der das Dichtauge (21) aufsitzt.

7. Filtereinrichtung nach Anspruch 4 oder 5, **dadurch gekennzeichnet, dass** der Zuganker (22) in den Dom (23) einschraubbar ist.

8. Filtereinrichtung nach Anspruch 5 und 6, **dadurch gekennzeichnet, dass** der Dom (23) einen stirnseitigen Aufnahmeabschnitt zum Einschrauben des Zugankers (22) aufweist, wobei die Ringschulter (24) den Aufnahmeabschnitt am Dom (23) umgreift.

9. Filtereinrichtung nach einem der Ansprüche 1 bis 7, **dadurch gekennzeichnet, dass** der Gassammelraum (8) an mindestens zwei Seiten von dem Filterelement (3) begrenzt ist.

10. Filtereinrichtung nach einem der Ansprüche 1 bis 8, **dadurch gekennzeichnet, dass** das Filterelement (3) U-förmig ausgebildet und der Gassammelraum (8) zwischen seitlichen Schenkeln des Filterelements (3) angeordnet ist.

11. Filtereinrichtung nach einem der Ansprüche 1 bis 9, **dadurch gekennzeichnet, dass** der Gassammelraum (8) randseitig offen ausgebildet ist.

12. Filtereinrichtung nach einem der Ansprüche 1 bis 10, **dadurch gekennzeichnet, dass** der Gassammelraum (8) eine runde, ovale, rechteckförmige oder dreieckförmige Grundform aufweist.

13. Filtereinrichtung nach einem der Ansprüche 1 bis 11, **dadurch gekennzeichnet, dass** das Filterelement (3) einen oder mehrere Filterbälge (16, 17, 18) mit Filterfalten umfasst.

14. Filtereinrichtung nach Anspruch 12, **dadurch gekennzeichnet, dass** die Filterfalten mindestens eines Filterbalgs (16, 17, 18) orthogonal zu der Randseite des Filterelements, an der sich der randseitig offene Gassammelraum (8) befindet, verlaufen.

15. Filtereinrichtung nach Anspruch 12, **dadurch gekennzeichnet, dass** die Filterfalten mindestens eines Filterbalgs (16, 17, 18) parallel zu der Randseite des Filterelements, an der sich der randseitig offene Gassammelraum (8) befindet, verlaufen.

16. Filtereinrichtung nach einem der Ansprüche 1 bis 14, **dadurch gekennzeichnet, dass** an dem Filterelement (3) ein umlaufender Kunststoffrahmen angeordnet, beispielsweise angespritzt ist.

17. Plattenförmiges Filterelement (3) für eine Filtereinrichtung nach einem der vorigen Ansprüche, welches orthogonal zu seiner Filterebene von einem zu reinigenden Gas durchströmbar ist, **dadurch gekennzeichnet, dass** eine Ausnehmung in das Filterelement (3) eingebracht ist, die einen reinseitigen Gassammelraum (8) bildet, wobei ein Dichtungselement (7), welches auf der Reinseite angeordnet ist, den Gassammelraum (8) zumindest teilweise umrahmt und wobei ein Dichtauge mit dem Dichtungselement verbunden ist, durch welches ein Zuganker der Filtereinrichtung führbar ist.

## Claims

1. Filtering device for gas filtration, in particular air filter, with a plate-shaped filter element (3) accommodated in a filter housing (2) and through which the gas to be cleaned can flow orthogonally to its filter plane, with a cover element (12) connected to the filter housing (2) via a tie rod (22) which passes through the filter element (3), wherein a recess is introduced into the filter element (3) which forms a clean-side gas collecting chamber (8) **characterized in that** the tie rod (22) in the gas collecting chamber (8) is guided through a sealing eyelet (21) connected to a sealing element (7) which is disposed on the clean side of the filter element (3) and at least partially frames the gas collecting chamber (8).

2. Filtering device according to claim 1, **characterized in that** the sealing element (7) extends along the outer contour of the filter element (3).

3. Filtering device according to claim 1 or 2, **characterized in that** the sealing eyelet (21) is connected to a sealing handle (11) which covers the gas collecting chamber (8) and is connected to the sealing element (7) on the clean side of the filter element (3).

4. Filtering device according to claim 3, **characterized in that** the sealing handle (11) is of partially circular design.

5. Filtering device according to one of the claims 1 to 3, **characterized in that** the sealing eyelet (21) is supported on a dome (23) of the filter housing (2) which projects into the gas collecting chamber (8).

6. Filtering device according to claim 4, **characterized in that** an annular shoulder (24), on which the sealing eyelet (21) rests, is formed on the dome (23).

7. Filtering device according to claim 4 or 5, **characterized in that** the tie rod (22) can be screwed into the dome (23).

8. Filtering device according to claim 5 and 6, **characterized in that** the dome (23) features a frontal receiving section for screwing the tie rod (22), wherein the annular shoulder (24) encloses the receiving section on the dome (23).

9. Filtering device according to one of the claims 1 to 7, **characterized in that** the gas collecting chamber (8) is delimited on at least two sides of the filter element (3).

10. Filtering device according to one of the claims 1 to 8, **characterized in that** the filter element (3) is U-shaped and **in that** the gas collecting chamber (8) is disposed between lateral legs of the filter element (3).

11. Filtering device according to one of the claims 1 to 9, **characterized in that** the gas collecting chamber (8) is open at the edges.

12. Filtering device according to one of the claims 1 to 10, **characterized in that** the gas collecting chamber (8) features a round, oval, rectangular or triangular basic shape.

13. Filtering device according to one of the claims 1 to 11, **characterized in that** the filter element (3) comprises one or several filter bellows (16, 17, 18) with filter folds.

14. Filtering device according to claim 12, **characterized in that** the filter folds of at least one filter bellows (16, 17, 18) extend orthogonally to the edge of the filter element at which the gas collecting chamber (8) open at the edge is located.

15. Filtering device according to claim 12, **characterized in that** the filter folds of at least one filter bellows (16, 17, 18) extend parallel to the edge of the filter element at which the gas collecting chamber (8) open at the edge is located.

16. Filtering device according to one of the claims 1 to 14, **characterized in that** a circumferential plastic frame is disposed, for example injected, on the filter element (3).

17. Plate-shaped filter element (3) for a filtering device according to one of the above claims, through which a gas to be cleaned can flow orthogonally to its filter plane, **characterized in that** a recess, which forms a clean-side gas collecting chamber (8), is introduced into the filter element (3), wherein a sealing element (7), which is disposed on the clean side, frames at least partially the gas collecting chamber (8) and wherein a sealing eyelet is connected to the sealing element through which a tie rod of the filtering device can be guided.

## Revendications

1. Dispositif filtrant pour la filtration des gaz, en particulier filtre à air, doté d'un élément filtrant en forme de plaque (3) qui est logé dans un boîtier de filtre (2) et à travers lequel le gaz à purifier peut s'écouler orthogonalement à son plan de filtre, doté d'un élément de couvercle (12) qui est relié au boîtier de filtre (2) par un tirant (22) qui passe à travers l'élément filtrant (3), un évidement étant introduit dans l'élément filtrant (3) qui forme une chambre de collecte des gaz (8) côté pur, **caractérisé en ce que** le tirant (22) est guidé dans la chambre de collecte des gaz (8) à travers un oeillet d'étanchéité (21) qui est relié à un élément d'étanchéité (7) disposé côté pur de l'élément filtrant (3) et encadre au moins partiellement la chambre de collecte des gaz (8).

2. Dispositif de filtration selon la revendication 1, **caractérisé en ce que** l'élément d'étanchéité (7) s'étend le long du contour extérieur de l'élément filtrant (3).

3. Dispositif de filtration selon la revendication 1 ou 2, **caractérisé en ce que** l'oeillet d'étanchéité (21) est connecté à un poignet d'étanchéité (11) qui recouvre la chambre de collecte des gaz (8) et est connecté à l'élément d'étanchéité (7) sur le côté pur de l'élément filtrant (3).

4. Dispositif de filtration selon la revendication 3, **caractérisé en ce que** le poignet d'étanchéité (11) est réalisé de manière partiellement circulaire.

5. Dispositif de filtration selon l'une des revendications 1 à 3, **caractérisé en ce que** l'oeillet d'étanchéité (21) repose sur un dôme (23) du boîtier de filtre (2), lequel dôme faisant saillie dans la chambre de collecte des gaz (8).

6. Dispositif de filtration selon la revendication 4, **caractérisé en ce qu'**un épaulement annulaire (24), sur lequel repose l'oeillet d'étanchéité (21), est formé sur le dôme (23).

7. Dispositif de filtration selon la revendication 4 ou 5, **caractérisé en ce que** le tirant (22) peut être vissé dans le dôme (23).

8. Dispositif de filtration selon la revendication 5 et 6, **caractérisé en ce que** le dôme (23) présente une section de logement frontale pour permettre de visser le tirant (22), l'épaulement annulaire (24) entourant la section de logement sur le dôme (23).

9. Dispositif de filtration selon l'une des revendications 1 à 7, **caractérisé en ce que** la chambre de collecte des gaz (8) est délimiter sur au moins deux côtés de l'élément filtrant (3).

10. Dispositif de filtration selon l'une des revendications 1 à 8, **caractérisé en ce que** l'élément filtrant (3) est réalisé en forme de U et **en ce que** la chambre de collecte des gaz (8) est disposée entre des branches latérales de l'élément filtrant (3).

11. Dispositif de filtration selon l'une des revendications 1 à 9, **caractérisé en ce que** la chambre de collecte des gaz (8) est ouverte sur le bord.

12. Dispositif de filtration selon l'une des revendications 1 à 10, **caractérisé en ce que** la chambre de collecte des gaz (8) a une forme de base ronde, ovale, rectangulaire ou triangulaire.

13. Dispositif de filtration selon l'une des revendications 1 à 11, **caractérisé en ce que** l'élément filtrant (8) comprend un ou plusieurs soufflets de filtre (16, 17, 18) avec des plis de filtre.

14. Dispositif de filtration selon la revendication 12, **caractérisé en ce que** les plis de filtre d'au moins un soufflet de filtre (16, 17, 18) s'étendent orthogonalement par rapport au bord de l'élément filtrant sur lequel se trouve la chambre de collecte des gaz (8) ouverte sur le bord.

15. Dispositif de filtration selon la revendication 12, **caractérisé en ce que** les plis de filtre d'au moins un soufflet de filtre (16, 17, 18) s'étendent parallèlement par rapport au bord de l'élément filtrant sur lequel se trouve la chambre de collecte des gaz (8) ouverte sur le bord.

16. Dispositif de filtration selon l'une des revendications 1 à 14, **caractérisé en ce qu'**un châssis en matière synthétique périphérique est disposé sur l'élément filtrant (3), par exemple moulé par injection.

17. Élément filtrant (3) en forme de plaque pour un dispositif de filtration selon l'une des revendications précédentes, qui peut être traversé orthogonalement à son plan de filtre par un gaz à purifier, **caractérisé en ce qu'**un évidement qui forme une chambre de collecte des gaz (8) côté pur est introduit dans l'élément filtrant (3), un élément d'étanchéité (7) disposé côté pur encadrant au moins partiellement la chambre de collecte des gaz (8) et un oeillet d'étanchéité étant relié à l'élément d'étanchéité à travers lequel un tirant du dispositif de filtration peut être guidé.
